# EUROPEAN PATENT APPLICATION

(11) **EP 4 304 045 A1**
(43) Date of publication of application: **10.01.2024**
(21) Application number: 22926335.5
(22) Date of filing: 29.07.2022
(51) Int. Cl.: H02J 7/00, H02H 7/18

(54) **ENERGY STORAGE APPARATUS**

(30) Priority: 09.05.2022 CN 202221088144 U
(71) Applicant: Contemporary Amperex Technology Co., Limited, Ningde City, Fujian 352100 (CN)
(72) Inventor: CHEN, Xinwei, Ningde Fujian 352100 (CN); LI, Xiangtao, Ningde Fujian 352100 (CN); YAN, Yu, Ningde Fujian 352100 (CN); DAN, Zhimin, Ningde Fujian 352100 (CN); LOU, Qidong, Ningde Fujian 352100 (CN)
(74) Representative: Holt, Lucy Rose
(86) International application number: PCT/CN2022/108957
(87) International publication number: WO 2023/216431

(57) **Abstract**

This application relates to an energy storage apparatus. The energy storage apparatus includes a control circuit, multiple battery clusters connected in parallel, and switch circuits corresponding to the battery clusters. The switch circuit includes a first switch and a protection circuit connected in parallel; the control circuit is connected to each first switch and each protection circuit; each battery cluster is connected to the corresponding first switch and protection circuit; and the control circuit is configured to control, according to a high voltage on signal, the protection circuit to be closed and the first switch to be opened. The energy storage apparatus in embodiments of this application can prevent batteries from being damaged by excessively high voltage or current when high voltage is applied to battery clusters.

## Description

This application refers to Chinese Patent Application No. 202221088144.3, filed on May 09, 2022 and entitled "ENERGY STORAGE APPARATUS", which is incorporated herein by reference in its entirety.

### TECHNICAL FIELD

This application relates to the field of energy storage technologies, and in particular, to an energy storage apparatus.

### BACKGROUND

With the rapid development of new energy technology, energy storage apparatuses have become one of the important research directions in the new energy field.

Currently, a single battery can no longer meet the charging demand, so an energy storage apparatus containing multiple batteries has been developed. The multiple batteries are first connected in series to form a battery cluster, and multiple battery clusters are then connected in parallel to form an energy storage portion of the energy storage apparatus. However, when a high voltage is applied to the battery cluster, the voltage or current may be excessively high, resulting in damage to the battery.

### SUMMARY

In view of the foregoing problems, this application provides an energy storage apparatus, which can prevent batteries from being damaged by excessively high voltage or current when a high voltage is applied to a battery cluster.

This application provides an energy storage apparatus. The energy storage apparatus includes a control circuit, multiple battery clusters connected in parallel, and switch circuits corresponding to the battery clusters, where the switch circuit includes a first switch and a protection circuit connected in parallel; the control circuit is connected to each first switch and each protection circuit; each battery cluster is connected to the corresponding first switch and protection circuit; and the control circuit is configured to control, according to a high voltage on signal, the protection circuit to be closed and the first switch to be opened.

In the technical solutions of this embodiment of this application, the voltage or current for applying high voltage to the battery cluster is regulated via the protection circuit, which can prevent batteries from being damaged by excessively high voltage or current.

In some embodiments, the protection circuit includes at least one resistor and a second switch; one terminal of the resistor is connected to a corresponding battery cluster and the other terminal of the resistor is connected to the second switch; the second switch is connected to the control circuit; and the control circuit is configured to control the second switch to be closed according to the high voltage on signal. In this embodiment of this application, the voltage or current for applying high voltage to the battery cluster is regulated via the resistor in the protection circuit, which can prevent batteries from being damaged by excessively high voltage or current when high voltage is applied to the battery cluster.

In some embodiments, the control circuit is further configured to control, at a preset time after the second switch is closed, the first switch to be closed, and then control the second switch to be opened. In this embodiment of this application, the battery cluster is switched to a normal high voltage on state after having been precharged for a period of time. This can protect the battery cluster while guaranteeing the efficiency of applying high voltage.

In some embodiments, the energy storage apparatus further includes a third switch corresponding to each battery cluster; one end of each battery cluster is connected to the corresponding first switch and the other end of each battery cluster is connected to the corresponding third switch; the third switch is connected to the control circuit; and the control circuit is further configured to control, according to the high voltage on signal, the third switch to be closed. In this embodiment of this application, switches are connected at both ends of the battery cluster, and the switches are controlled to be closed when a high voltage is applied. This can protect the battery cluster.

In some embodiments, the energy storage apparatus further includes a regulator and a bypass switch that are connected in parallel and correspond to each battery cluster; and the control circuit is connected to each regulator and each bypass switch. In this embodiment of this application, the regulator is used to prevent internal loops from damaging the batteries, and the bypass switch is used to reduce losses caused by the regulator.

In some embodiments, for each battery cluster, an output terminal of the regulator is connected to a positive electrode of the battery cluster; or the output terminal of the regulator is connected to a negative electrode of the battery cluster; or the output terminal of the regulator is connected between any two batteries in the battery cluster. In this embodiment of this application, the position of the regulator can be flexibly set so that the regulator can achieve better regulation.

In some embodiments, a first input terminal of the regulator is connected to the positive electrode of the corresponding battery cluster, and a second input terminal of the regulator is connected to the negative electrode of the corresponding battery cluster. Such connection manner can ensure normal operation of the regulator.

In some embodiments, the first input terminal and second input terminal of the regulator are both connected to a power source. Such connection manner can ensure normal operation of the regulator.

In some embodiments, the regulator includes a DCDC converter. Using the DCDC converter for voltage or current regulation can prevent internal loops from damaging the batteries.

In some embodiments, the bypass switch is an H-bridge in the DCDC converter.

In some embodiments, the control circuit includes a master controller and multiple slave controllers, where the master controller is connected to the multiple slave controllers, and each slave controller is connected to the corresponding battery cluster, first switch, and protection circuit. In this embodiment of this application, the master controller and the slave controllers are used for control, achieving more refined and accurate control.

In some embodiments, the energy storage apparatus further includes a collection circuit; the collection circuit includes at least one voltage sensor and/or at least one current sensor; and the collection circuit is connected to the control circuit and the multiple battery clusters. In this embodiment of this application, the collection circuit collects the cluster voltage and/or cluster current, and the control circuit performs control based on the cluster voltage and/or cluster current collected, so that the regulator can be more accurately controlled to regulate the voltage and/or current, better preventing internal loops from damaging the batteries.

This application further provides a control method for an energy storage apparatus. The method is applied to the foregoing energy storage apparatus and includes:
controlling, by the control circuit according to a high voltage on signal, the protection circuit to be closed and the first switch to be opened. In the technical solutions of this embodiment of this application, the protection circuit is controlled to regulate the voltage or current for applying high voltage to the battery cluster, which can prevent batteries from being damaged by excessively high voltage or current.

In some embodiments, controlling, by the control circuit according to a high voltage on signal, the protection circuit to be closed includes:
controlling, by the control circuit according to the high voltage on signal, the second switch to be closed. In this embodiment of this application, the voltage or current for applying high voltage to the battery cluster is regulated via the resistor in the protection circuit, which can prevent batteries from being damaged by excessively high voltage or current when high voltage is applied to the battery cluster.

In some embodiments, the method further includes:
controlling, by the control circuit according to the high voltage on signal, the third switch to be closed. In this embodiment of this application, switches are connected at both ends of the battery cluster, and the switches are controlled to be closed when a high voltage is applied. This can protect the battery cluster.

This application further provides a control apparatus for an energy storage apparatus. The control apparatus is applied to the foregoing energy storage apparatus and includes:
a first control unit configured to control, according to a high voltage on signal, the protection circuit to be closed and the first switch to be opened. In the technical solutions of this embodiment of this application, the voltage or current for applying high voltage to the battery cluster is regulated via the protection circuit, which can prevent batteries from being damaged by excessively high voltage or current.

In some embodiments, the first control unit is configured to control, according to the high voltage on signal, the second switch to be closed. In this embodiment of this application, the voltage or current for applying high voltage to the battery cluster is regulated via the resistor in the protection circuit, which can prevent batteries from being damaged by excessively high voltage or current when high voltage is applied to the battery cluster.

In some embodiments, the control apparatus further includes:
a second control unit configured to control, according to the high voltage on signal, the third switch to be closed. In this embodiment of this application, switches are connected at both ends of the battery cluster, and the switches are controlled to be closed when a high voltage is applied. This can protect the battery cluster.

The foregoing description is merely an overview of the technical solution of this application. For a better understanding of the technical means in this application such that they can be implemented according to the content of the specification, and to make the above and other objectives, features and advantages of this application more apparent and easier to understand, the following describes specific embodiments of this application.

### BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments and are not intended to limit this application. In addition, in all the accompanying drawings, same parts are indicated by same accompanying symbols. In the accompanying drawings:
FIG. 1 is a first schematic diagram of a structure of an energy storage apparatus according to some embodiments of this application;
FIG. 2 is a second schematic diagram of a structure of an energy storage apparatus according to some embodiments of this application;
FIG. 3 is a third schematic diagram of a structure of an energy storage apparatus according to some embodiments of this application;
FIG. 4 is a fourth schematic diagram of a structure of an energy storage apparatus according to some embodiments of this application;
FIG. 5 is a first schematic diagram of a connection position of a regulator according to some embodiments of this application;
FIG. 6 is a second schematic diagram of a connection position of a regulator according to some embodiments of this application;
FIG. 7 is a third schematic diagram of a connection position of a regulator according to some embodiments of this application;
FIG. 8 is a schematic diagram of a connection manner of input terminals of a regulator according to some embodiments of this application; and
FIG. 9 is a fifth schematic diagram of a structure of an energy storage apparatus according to some embodiments of this application.

Reference signs in specific embodiments are as follows:
control circuit 10, battery cluster 20, switch circuit 30, first switch K1, protection circuit 301; resistor R, second switch K2, third switch K3, regulator 40, bypass switch K4; master controller 101, and slave controller 102.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "multiple" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "multiple" means more than two (inclusive). Similarly, "multiple groups" means more than two (inclusive) groups, and "multiple pieces" means more than two (inclusive) pieces.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, a single battery can no longer meet the charging demand, so an energy storage apparatus containing multiple batteries has been developed. The multiple batteries are first connected in series to form a battery cluster, and multiple battery clusters are then connected in parallel to form an energy storage portion of the energy storage apparatus. The applicants have found that when a high voltage is applied to a battery cluster, the voltage or current is excessively high, causing damage to batteries.

To avoid the foregoing phenomenon, the applicants have found through research that damage to batteries can be avoided by pre-charging the battery cluster during application of high voltage, that is, controlling the voltage or current of the battery cluster. Specifically, the energy storage apparatus includes a control circuit and multiple battery clusters connected in parallel, and in the energy storage apparatus, each battery cluster is provided with a corresponding switch circuit, the switch circuit including a first switch and a protection circuit connected in parallel. The control circuit controls, according to a high voltage on signal, the protection circuit to be closed and the first switch to be opened, and the protection circuit can regulate the voltage or current for applying high voltage to the battery cluster, thereby preventing the batteries from being damaged by excessively high voltage or current.

The battery and energy storage apparatus disclosed in some embodiments of this application can be used without limitation to electric apparatuses such as vehicles, ships, or aircraft, and charging devices for various electric apparatuses.

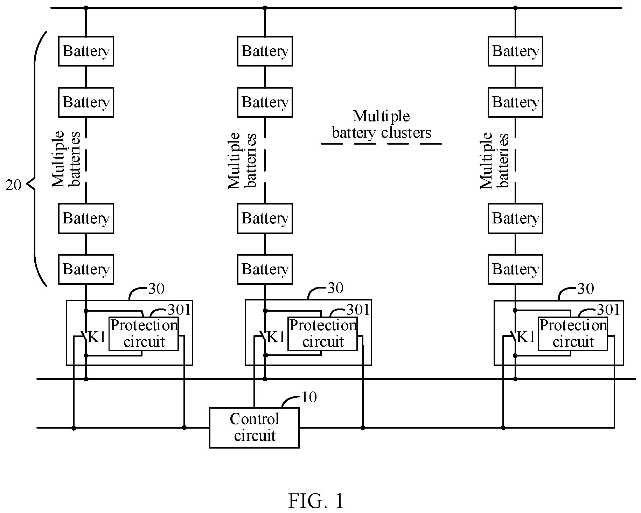

Refer to FIG. 1. FIG. 1 is a schematic diagram of a structure of an energy storage apparatus according to some embodiments of this application. The energy storage apparatus includes a control circuit 10, multiple battery clusters 20 connected in parallel, and switch circuits 30 corresponding to the battery clusters 20. The switch circuit 30 includes a first switch K1 and a protection circuit 301 connected in parallel; the control circuit 10 is connected to each first switch K1 and each protection circuit 301; each battery cluster 20 is connected to the corresponding first switch K1 and protection circuit 301; and the control circuit 10 is configured to control, according to a high voltage on signal, the protection circuit 301 to be closed and the first switch K1 to be opened.

The energy storage apparatus includes a control circuit 10 and multiple battery clusters 20 connected in parallel, and each battery cluster 20 is provided with a corresponding switch circuit 30 in the energy storage apparatus. Each switch circuit 30 includes a first switch K1 and a protection circuit 301 connected in parallel. The control circuit 10 is connected to each first switch K1 and each protection circuit 301, and each battery cluster 20 is also connected to corresponding first switch K1 and protection circuit 301.

When a high voltage is applied, the control circuit 10 controls, according to the high voltage on signal, each protection circuit 301 to be closed and each first switch K1 to be opened at the same time. In this way, the battery clusters 20 are applied with the high voltage via the protection circuit 301. The protection circuit 301 can regulate the voltage or current for applying high voltage to the battery cluster 20 so as to bring the battery cluster 20 into a pre-charging state instead of directly applying high voltage, thereby preventing the batteries from being damaged by excessively high voltage or current.

In the foregoing embodiment, the energy storage apparatus includes a control circuit, multiple battery clusters connected in parallel, and switch circuits corresponding to the battery clusters, where the switch circuit includes a first switch and a protection circuit connected in parallel; the control circuit is connected to each first switch and each protection circuit; each battery cluster is connected to the corresponding first switch and protection circuit; and the control circuit controls, according to a high voltage on signal, the protection circuit to be closed and the first switch to be opened. In this embodiment of this application, the voltage or current for applying high voltage to the battery cluster is regulated via the protection circuit, which can prevent the batteries from being damaged by excessively high voltage or current.

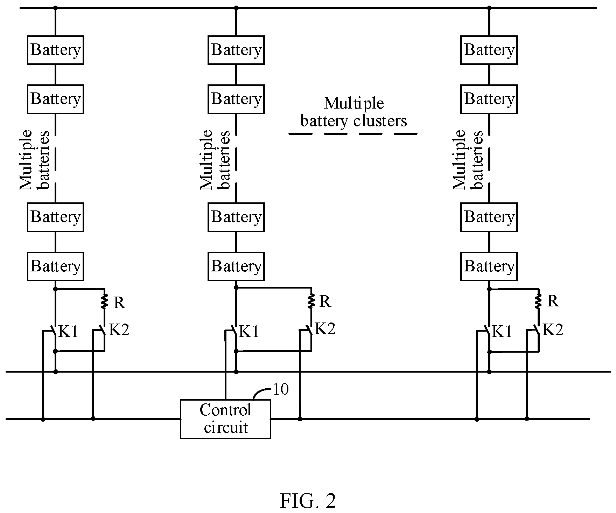

According to some embodiments of this application, referring to FIG. 2, the protection circuit 301 includes at least one resistor R and a second switch K2; one terminal of the resistor R is connected to a corresponding battery cluster 20 and the other terminal of the resistor R is connected to the second switch K2; the second switch K2 is connected to the control circuit 10; and the control circuit 10 is configured to control, according to the high voltage on signal, the second switch K2 to be closed.

The protection circuit 301 may include at least one resistor R and a second switch K2, where the resistor R is connected between the battery cluster 20 and the second switch K2, and the second switch K2 is connected to the control circuit 10. The control circuit 10 controls, according to the high voltage on signal, the second switch K2 to be closed, such that each battery cluster 20 is applied with the high voltage via the second switch K2 and the resistor R.

In practical applications, the voltage or current on the battery cluster 20 can be regulated by adjusting the number of resistors and the resistance. The number of resistors and the resistance are not limited in the embodiments of this application, and can be set based on an actual situation.

In the foregoing embodiment, the protection circuit includes at least one resistor and a second switch; one terminal of the resistor is connected to the corresponding battery cluster and the other terminal of the resistor is connected to the second switch; the second switch is connected to the control circuit; and the control circuit is configured to control, according to the high voltage on signal, the second switch to be closed. In this embodiment of this application, the voltage or current for applying high voltage to the battery cluster is regulated via the resistor in the protection circuit, which can prevent batteries from being damaged by excessively high voltage or current when high voltage is applied to the battery cluster.

According to some embodiments of this application, the control circuit 10 is further configured to control, at a preset time after the second switch K2 is closed, the first switch K1 to be closed and then the second switch K2 to be opened.

After the control circuit 10 controls the second switch K2 to be closed, the battery cluster 20 enters a pre-charging state. After a period of time, that is, at the preset time after the second switch K2 is closed, the first switch K1 is controlled to be closed, and then the second switch K2 is controlled to be opened. In this way, high voltage is applied to the battery cluster 20 via the first switch K1.

For example, at the fifth second after the second switch K2 is closed, the control circuit 10 controls the first switch K1 to be closed, and then controls the second switch K2 to be opened. The preset time is not limited in the embodiments of this application, and can be set based on the time and efficiency of applying high voltage.

In the foregoing embodiment, the control circuit is further configured to control, at the preset time after the second switch is closed, the first switch to be closed, and then control the second switch to be opened. In this embodiment of this application, the battery cluster is switched to a normal high voltage on state after having been precharged for a period of time. This can protect the battery cluster while guaranteeing the efficiency of applying high voltage.

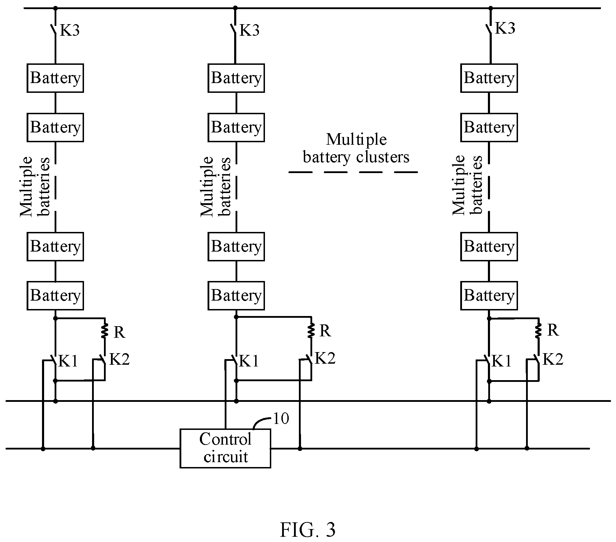

According to some embodiments of this application, referring to FIG. 3, the energy storage apparatus further includes a third switch K3 corresponding to each battery cluster 20; one end of each battery cluster 20 is connected to the corresponding first switch K1 and the other end of each battery cluster 20 is connected to the corresponding third switch K3; the third switch K3 is connected to the control circuit 10; and the control circuit 10 is further configured to control, according to the high voltage on signal, the third switch K3 to be closed.

The energy storage apparatus may further include a third switch K3 corresponding to each battery cluster 20, and the control circuit 10 is connected to each third switch K3. In addition, the first switch K1 is connected at one end of the battery cluster 20, and the third switch K3 is connected at the other end of the battery cluster 20. For example, the first switch K1 is connected to a positive electrode terminal of the battery cluster 20, and the third switch K3 is connected to a negative electrode terminal of the battery cluster 20; or the first switch K1 is connected to the negative electrode terminal of the battery cluster 20, and the third switch K3 is connected to the positive electrode terminal of the battery cluster 20. The connection manner is not limited in the embodiments of this application.

During application of high voltage, the control circuit 10 may control, according to the high voltage on signal, the third switch K3 to be closed, and then control the second switch K2 to be closed and the first switch K1 to be opened. Then, at the preset time after the first switch K1 is closed, the control circuit 10 controls the first switch K1 to be closed and the second switch K2 to opened. In this way, while the third switch K3 and the second switch K2 are closed, high voltage can be applied to the battery cluster 20 via the third switch K3, the resistor R, and the second switch K2. In this case, the voltage or current for applying high voltage to the battery cluster 20 is regulated by adjusting the number of resistors and the resistance, preventing excessively high voltage or current from damaging the battery clusters 20. While the third switch K3 and the first switch K1 are closed, high voltage is applied to the battery cluster 20 via the third switch K3 and the first switch K1. This can improve the speed and efficiency of applying high voltage, as compared to pre-charging.

According to some embodiments of this application, the first switch K1, the second switch K2, and the third switch K3 may be implemented using relays, or may be implemented using transistors or the like. This is not limited in the embodiments of this application.

In the foregoing embodiment, the energy storage apparatus further includes a third switch corresponding to each battery cluster; one end of each battery cluster is connected to the corresponding first switch and the other end of each battery cluster is connected to the corresponding third switch; the third switch is connected to the control circuit; and the control circuit is further configured to control, according to the high voltage on signal, the third switch to be closed. In this embodiment of this application, switches are connected at both ends of the battery cluster, and the switches are controlled to be closed when a high voltage is applied. This can protect the battery cluster.

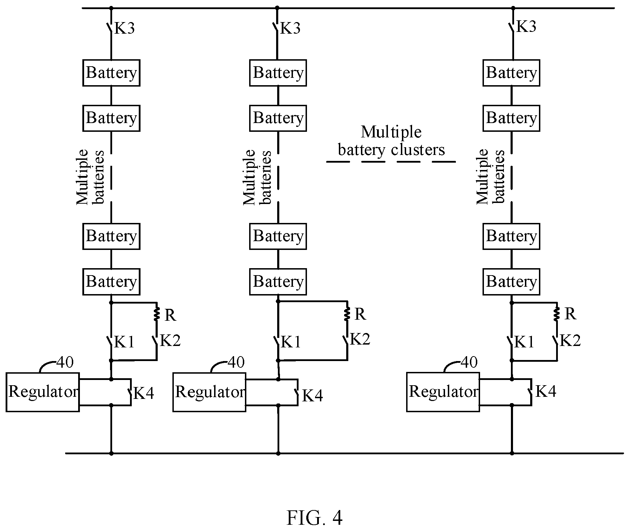

According to some embodiments of this application, referring to FIG. 4, the energy storage apparatus further includes a regulator 40 and a bypass switch K4 that are connected in parallel and correspond to each battery cluster 20; and the control circuit 10 is connected to each regulator 40 and each bypass switch K4.

Voltage differences may occur between the multiple battery clusters 20 in the energy storage apparatus. The voltage differences will lead to internal loops, further resulting in damage to the batteries. In order to prevent internal loops from damaging the batteries, the regulator 40 is provided in the energy storage apparatus. In one embodiment, each battery cluster 20 has a corresponding regulator 40, that is, the battery clusters 20 are connected to the regulators 40 in a one-to-one manner, and the control circuit 10 is connected to each regulator 40. It should be noted that the connection between the control circuit and the regulator is not marked in FIG. 4.

After determining that a voltage difference is present between the multiple battery clusters 20, the control circuit 10 determines, based on the voltage difference, a target battery cluster 20 to be regulated, and determines regulation information for the regulator 40 corresponding to the target battery cluster 20. Then, the control circuit 10 sends the regulation information to the regulator 40 corresponding to the target battery cluster 20, and the regulator 40 receives the regulation information and adjusts the voltage or current of the target battery cluster 20 according to the regulation information, so as to reduce the voltage difference between the target battery cluster 20 and other battery clusters 20, thereby preventing internal loops from damaging the batteries. Alternatively, the regulator 40 adjusts the voltage or current of the target battery cluster 20 according to the regulation information, so that voltage of the target battery cluster 20 that is not suitable for discharging is lower than voltage of other battery clusters 20 to prevent the target battery cluster 20 from discharging, or so that voltage of the target battery cluster 20 that is not suitable for charging is higher than the voltage of other battery clusters 20 to prevent the target battery cluster 20 from charging. This can also avoid damage to the battery.

The provision of the regulator 40 in the energy storage apparatus can prevent damage to the battery caused by voltage differences between multiple battery clusters 20. However, the regulators 40 also increase loss. Therefore, one bypass switch K4 is connected in parallel to each regulator 40 in the energy storage apparatus, and the control circuit 10 is connected to each bypass switch K4. It should be noted that the connection between the control circuit and the bypass switch is not marked in FIG. 4.

When it is determined that the regulator 40 is to be used for voltage or current regulation, the bypass switch K4 connected in parallel with the regulator 40 is controlled to be opened; and when it is determined that the regulator 40 is not to be used for voltage or current regulation, the bypass switch K4 connected in parallel with the regulator 40 is controlled to be closed, leaving the regulator 40 in a bypass state.

In the foregoing embodiment, the energy storage apparatus further includes a regulator and a bypass switch that are connected in parallel and correspond to each battery cluster; and the control circuit is connected to each regulator and each bypass switch. In this embodiment of this application, the regulator is used to prevent internal loops from damaging the batteries, and the bypass switch is used to reduce losses caused by the regulator.

According to some embodiments of this application, for each battery cluster 20, an output terminal of the regulator 40 is connected to the positive electrode of the battery cluster 20; or the output terminal of the regulator 40 is connected to the negative electrode of the battery cluster 20; or the output terminal of the regulator 40 is connected between any two batteries in the battery cluster 20.

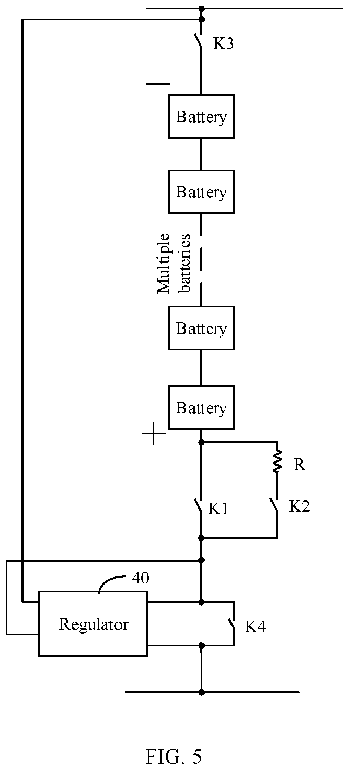

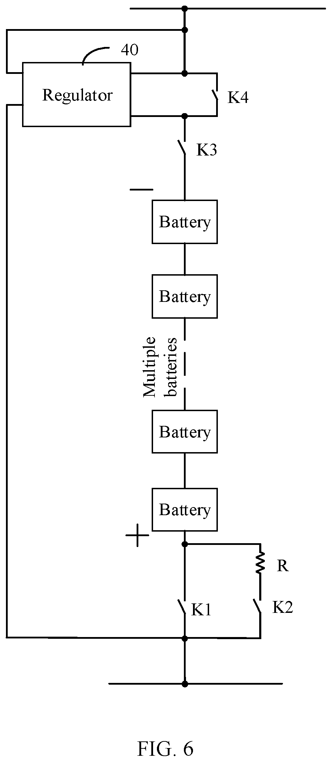

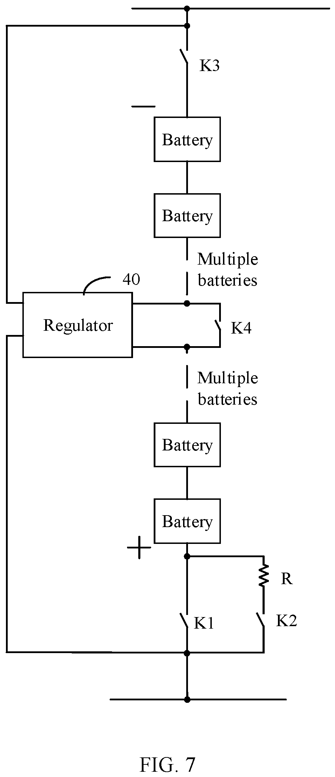

Referring to FIG. 5, the output terminal of the regulator 40 is connected to the positive electrode of the battery cluster 20. Referring to FIG. 6, the output terminal of the regulator 40 is connected to the negative electrode of the battery cluster 20. Referring to FIG. 7, the output terminal of the regulator 40 is connected between two batteries in the middle of the battery cluster 20. The output terminal of the regulator 40 can be connected at any position in the battery cluster 20. This is not limited in the embodiments of this application. It should be noted that the connections between the control circuit and the regulator and between the control circuit and the bypass switch are not marked in FIG. 5 to FIG. 7.

In the foregoing embodiment, for each battery cluster, the output terminal of the regulator is connected to the positive electrode of the battery cluster; or the output terminal of the regulator is connected to the negative electrode of the battery cluster; or the output terminal of the regulator is connected between any two batteries in the battery cluster. In this embodiment of this application, the position of the regulator can be flexibly set so that the regulator can achieve better regulation.

According to some embodiments of this application, referring to FIG. 5 to FIG. 7, a first input terminal of the regulator 40 is connected to the positive electrode of the corresponding battery cluster 20, and a second input terminal of the regulator 40 is connected to the negative electrode of the corresponding battery cluster 20.

The input terminals of the regulator 40 may be connected in parallel with the corresponding battery cluster 20, that is, the first input terminal of the regulator 40 is connected to the positive electrode of the corresponding battery cluster 20 and the second input terminal of the regulator 40 is connected to the negative electrode of the battery cluster 20.

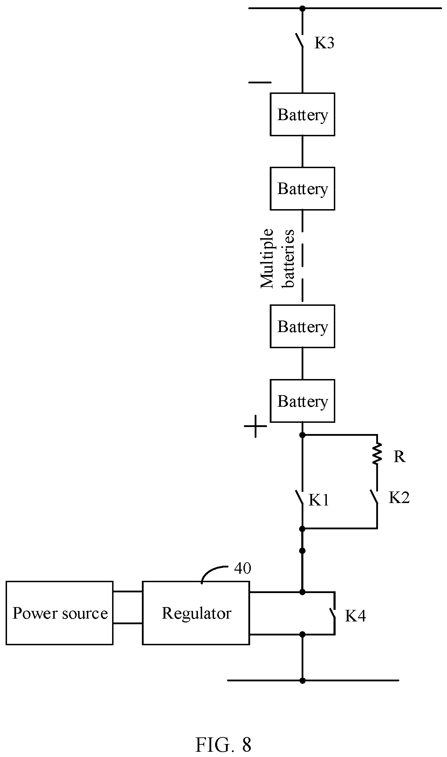

According to some embodiments of this application, referring to FIG. 8, both the first input terminal and the second input terminal of the regulator 40 are connected to a power source.

The input terminals of the regulator 40 may alternatively be connected to the power source, that is, both the first input terminal and the second input terminal of the regulator 40 are connected to the power source. The power source includes at least one of a preset battery, a super capacitor, and a direct-current bus.

According to some embodiments of this application, the regulator 40 is powered using a preset power source or using the corresponding battery cluster 20.

In the foregoing embodiment, the first input terminal of the regulator is connected to the positive electrode of the corresponding battery cluster, and the second input terminal of the regulator is connected to the negative electrode of the corresponding battery cluster. Alternatively, both the first input terminal and the second input terminal of the regulator are connected to the power source. The foregoing connection manner can ensure normal operation of the regulator.

According to some embodiments of this application, the regulator 40 includes a DCDC converter.

The DCDC converter can convert one direct-current voltage to another direct-current voltage. After the control circuit 10 sends regulation information to the DCDC converter, the DCDC converter outputs a corresponding voltage according to the regulation information, so as to regulate the voltage or current of the battery cluster 20.

According to some embodiments of this application, the bypass switch K4 is an H-bridge in the DCDC converter.

A circuit with an H-bridge structure is provided in the DCDC converter, and the H-bridge can serve as a switch of the DCDC converter. The DCDC converter can be changed to a bypass state by short-circuiting upper and lower arms of the H-bridge simultaneously.

In the foregoing embodiment, the regulator includes the DCDC converter, and using the DCDC converter for voltage or current regulation can prevent internal loops from damaging the batteries.

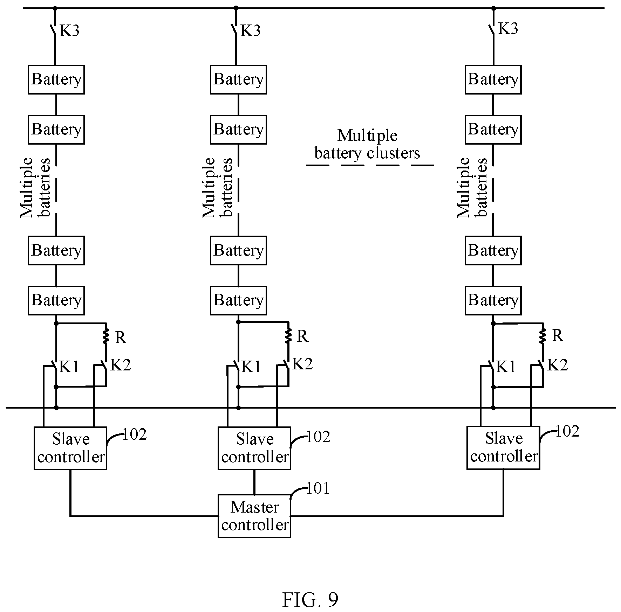

According to some embodiments of this application, referring to FIG. 9, the control circuit 10 includes a master controller 101 and multiple slave controllers 102, where the master controller 101 is connected to the multiple slave controllers 102, and each slave controller 102 is connected to the corresponding battery cluster 20, first switch K1, and protection circuit 301.

In practical application, the control circuit 10 may include a master controller 101 and multiple slave controllers 102. The master controller 101 is connected to the multiple slave controllers 102. Each slave controller 102 corresponds to one battery cluster 20 and is connected to the battery cluster 20, as well as the first switch K1 and the protection circuit 301 that correspond to the battery cluster 20. Specifically, each slave controller 102 is connected to the second switch K2 in the corresponding protection circuit 301. Each slave controller 102 is also connected to the corresponding third switch K3, regulator 40, and bypass switch K4.

After obtaining the high voltage on signal, the master controller 101 sends a control signal to the slave controller 102, and the slave controller controls the corresponding first switch K1, second switch K2, third switch K3, regulator 40, and bypass switch K4 according to the control signal.

The foregoing master controller 101 may include an NMNW (master battery management unit), and the foregoing slave controller 102 includes an SBMU (slave battery management unit). The master controller and slave controller are not limited in the embodiments of this application, and can be set based on an actual situation.

In the foregoing embodiment, the control circuit includes a master controller and multiple slave controllers, where the master controller is connected to the multiple slave controllers, and each slave controller is connected to the corresponding battery cluster, first switch, and protection circuit. In this embodiment of this application, the master controller and the slave controllers are used for control, achieving more refined and accurate control.

According to some embodiments of this application, the energy storage apparatus further includes a collection circuit, where the collection circuit includes at least one voltage sensor and/or at least one current sensor; and the collection circuit is connected to the control circuit 10 and the multiple battery clusters 20.

The energy storage apparatus further includes a collection circuit, and the collection circuit includes at least one voltage sensor and/or at least one current sensor. The voltage sensor is connected to the control circuit 10 and the multiple battery clusters 20, and can collect cluster voltage of each battery cluster 20 and send the cluster voltage to the control circuit 10. The current sensor is connected to the control circuit 10 and the multiple battery clusters 20, and can collect cluster current of each battery cluster 20 and send the cluster current to the control circuit 10. The control circuit 10 can control the first switch K1, the second switch K2, the third switch K3, the regulator 40, and the bypass switch K4 based on the cluster voltage and/or the cluster current.

In the foregoing embodiment, the energy storage apparatus further includes a collection circuit; the collection circuit includes at least one voltage sensor and/or at least one current sensor; and the collection circuit is connected to the control circuit and the multiple battery clusters. In this embodiment of this application, the collection circuit collects the cluster voltage and/or cluster current, and the control circuit performs control based on the cluster voltage and/or cluster current collected, so that the regulator can be more accurately controlled to regulate the voltage and/or current, better preventing internal loops from damaging the batteries.

In some embodiments of this application, a control method for an energy storage apparatus is further provided. The method is applied to the energy storage apparatus provided in the foregoing embodiments of this application, and the method includes:
controlling, by the control circuit according to a high voltage on signal, the protection circuit to be closed and the first switch to be opened.

According to some embodiments of this application, controlling, by the control circuit according to a high voltage on signal, the protection circuit to be closed includes:
controlling, by the control circuit according to the high voltage on signal, the second switch to be closed.

According to some embodiments of this application, the method further includes:
controlling, by the control circuit according to the high voltage on signal, the third switch to be closed.

Specific limitations on the control method for an energy storage apparatus can be found in the foregoing embodiments of the energy storage apparatus of this application, and are not be repeated herein.

In some embodiments of this application, a control apparatus for an energy storage apparatus is further provided, where the control apparatus is applied to the energy storage apparatus provided in the foregoing embodiments of this application. The control apparatus includes:
a first control unit configured to control, according to a high voltage on signal, the protection circuit to be closed and the first switch to be opened.

According to some embodiments of this application, the first control unit is configured to control, according to the high voltage on signal, the second switch to be closed.

According to some embodiments of this application, the control apparatus further includes:
a second control unit configured to control, according to the high voltage on signal, the third switch to be closed.

Specific limitations on the control apparatus for an energy storage apparatus can be found in the foregoing embodiments of the energy storage apparatus of this application, and are not be repeated herein.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application to facilitate specific and detailed understanding of the technical solutions of this application, but should not be construed as a limitation on the scope of this utility model patent. It should be noted that those of ordinary skill in the art may further make several modifications and improvements without departing from the concept of this application, and these modifications and improvements also fall within the protection scope of this application. It should be understood that the technical solutions obtained by logical analysis, reasoning or limited experiments by persons skilled in the art based on the technical solutions provided in this application are within the scope of protection of the appended claims described in this application. Therefore, the scope of protection of the patent of this application shall be subject to the contents of the appended claims, and the specification and the accompanying drawings may be used to interpret contents of the claims.

## Claims

1. An energy storage apparatus, wherein the energy storage apparatus comprises a control circuit, multiple battery clusters connected in parallel, and switch circuits corresponding to the battery clusters, wherein the switch circuit comprises a first switch and a protection circuit connected in parallel;
the control circuit is connected to each first switch and each protection circuit; each battery cluster is connected to the corresponding first switch and protection circuit; and
the control circuit is configured to control, according to a high voltage on signal, the protection circuit to be closed and the first switch to be opened.

2. The apparatus according to claim 1, wherein the protection circuit comprises at least one resistor and a second switch; one terminal of the resistor is connected to the corresponding battery cluster and the other terminal of the resistor is connected to the second switch; the second switch is connected to the control circuit; and
the control circuit is configured to control, according to the high voltage on signal, the second switch to be closed.

3. The apparatus according to claim 1 or 2, wherein the energy storage apparatus further comprises a third switch corresponding to each battery cluster; one end of each battery cluster is connected to the corresponding first switch and the other end of each battery cluster is connected to the corresponding third switch; the third switch is connected to the control circuit; and
the control circuit is further configured to control, according to the high voltage on signal, the third switch to be closed.

4. The apparatus according to claim 1 or 2, wherein the energy storage apparatus further comprises a regulator and a bypass switch that are connected in parallel and correspond to each battery cluster; and the control circuit is connected to each regulator and each bypass switch.

5. The apparatus according to claim 4, wherein for each battery cluster, an output terminal of the regulator is connected to a positive electrode of the battery cluster; or the output terminal of the regulator is connected to a negative electrode of the battery cluster; or the output terminal of the regulator is connected between any two batteries of the battery cluster.

6. The apparatus according to claim 4, wherein a first input terminal of the regulator is connected to a positive electrode of the corresponding battery cluster, and a second input terminal of the regulator is connected to a negative electrode of the corresponding battery cluster.

7. The apparatus according to claim 4, wherein both a first input terminal and a second input terminal of the regulator are connected to a power source.

8. The apparatus according to claim 4, wherein the regulator comprises a DCDC converter.

9. The apparatus according to claim 8, wherein the bypass switch is an H-bridge in the DCDC converter.

10. The apparatus according to claim 1, wherein the control circuit comprises a master controller and multiple slave controllers, wherein the master controller is connected to the multiple slave controllers; and
each slave controller is connected to the corresponding battery cluster, first switch, and protection circuit.

11. The apparatus according to claim 1, wherein the energy storage apparatus further comprises a collection circuit, wherein the collection circuit comprises at least one voltage sensor and/or at least one current sensor; and the collection circuit is connected to the control circuit and the multiple battery clusters.

12. A control method for an energy storage apparatus, wherein the method is applied to the energy storage apparatus according to any one of claims 1 to 11, and the method comprises:
controlling, by the control circuit according to a high voltage on signal, the protection circuit to be closed and the first switch to be opened.

13. The method according to claim 12, wherein controlling, by the control circuit according to a high voltage on signal, the protection circuit to be closed comprises:
controlling, by the control circuit according to the high voltage on signal, the second switch to be closed.

14. The method according to claim 12 or 13, wherein the method further comprises:
controlling, by the control circuit according to the high voltage on signal, the third switch to be closed.

15. A control apparatus for an energy storage apparatus, wherein the control apparatus is applied to the energy storage apparatus according to any one of claims 1 to 11, and the control apparatus comprises:
a first control unit configured to control, according to a high voltage on signal, the protection circuit to be closed and the first switch to be opened.

16. The control apparatus according to claim 15, wherein the first control unit is configured to control, according to the high voltage on signal, the second switch to be closed.

17. The control apparatus according to claim 15 or 16, wherein the control apparatus further comprises:
a second control unit configured to control, according to the high voltage on signal, the third switch to be closed.
